# FASCICULE DE BREVET EUROPEEN

(11) **EP 3 957 106 B1**
(45) Date de publication et mention de la délivrance du brevet: **10.07.2024**
(21) Numéro de dépôt: 20718330.2
(22) Date de dépôt: 16.04.2020
(51) Int. Cl.: H04W 68/06, H04W 48/12, H04W 8/24, H04W 48/14

(54) **PROCÉDÉ D'ÉMISSION D'UN MESSAGE SUR UN CANAL DE DIFFUSION AVEC RETRANSMISSION SUR UNE LIAISON POINT À POINT**
VERFAHREN ZUR ÜBERTRAGUNG EINER NACHRICHT ÜBER EINEN RUNDFUNKKANAL MIT RÜCKÜBERTRAGUNG ÜBER EINE PUNKT-ZU-PUNKT-VERBINDUNG
METHOD FOR TRANSMITTING A MESSAGE OVER A BROADCAST CHANNEL WITH RETRANSMISSION OVER A POINT-TO-POINT LINK

(30) Priorité: 18.04.2019 FR 1904161
(43) Date de publication de la demande: 23.02.2022
(73) Titulaire: UNABIZ, 31670 Labège (FR)
(72) Inventeur: MANSUY, Arnaud, 31300 TOULOUSE (FR); ZUNIGA, Juan Carlos, Montreal, QC H4L 3J4 (CA)
(74) Mandataire: Ipside
(86) Numéro de dépôt international: PCT/EP2020/060703
(87) Numéro de publication internationale: WO 2020/212486

(56) Documents cités:
- EP-A2- 2 662 993
- US-A1- 2012 140 677
- US-A1- 2018 227 083

## Description

### Domaine technique

La présente invention appartient au domaine des systèmes de communication sans fil, et concerne plus particulièrement un procédé d'émission, par un réseau d'accès, d'un message à destination d'un groupe de terminaux.

### Etat de la technique

La présente invention trouve une application particulièrement avantageuse, bien que nullement limitative, pour des systèmes de communication sans fil mis en oeuvre pour des applications du type M2M (acronyme anglo-saxon pour « Machine-to-Machine ») ou du type « Internet des objets » (« Internet of Things » ou loT dans la littérature anglo-saxonne).

Dans de tels systèmes de communication sans fil, les échanges de messages sont essentiellement monodirectionnels, en l'occurrence sur un lien montant entre des terminaux et un réseau d'accès dudit système.

Les terminaux émettent des messages sur le lien montant qui sont collectés par des stations de base du réseau d'accès, de préférence sans avoir à s'associer préalablement à une ou plusieurs stations de base du réseau d'accès. En d'autres termes, les messages émis par un terminal sur le lien montant ne sont pas destinés à une station de base spécifique du réseau d'accès, et le terminal émet ses messages en supposant qu'ils pourront être reçus par au moins une station de base. De telles dispositions sont avantageuses en ce que le terminal n'a pas besoin de réaliser des mesures régulières, gourmandes notamment d'un point de vue consommation électrique, pour déterminer la station de base la plus appropriée pour recevoir ses messages. La complexité repose sur le réseau d'accès, qui doit être capable de recevoir des messages montants pouvant être émis à des instants arbitraires et sur des fréquences centrales arbitraires.

Un tel mode de fonctionnement, dans lequel les échanges de messages sont essentiellement monodirectionnels, est tout à fait satisfaisant pour de nombreuses applications, comme par exemple la télé-relève de compteurs de gaz, d'eau, d'électricité, la télésurveillance de bâtiments ou de maisons, etc.

Dans certaines applications cependant, il peut être avantageux de pouvoir également effectuer des échanges de messages dans l'autre direction, à savoir sur un lien descendant du réseau d'accès vers les terminaux.

En particulier, il peut être avantageux d'émettre des messages sur un canal de diffusion, globale ou multipoint (respectivement « broadcast » ou « multicast » dans la littérature anglo-saxonne), à destination des terminaux. Notamment, l'émission de messages sur un canal de diffusion peut être mise en oeuvre pour effectuer des mises à jour de logiciels utilisés par un groupe de terminaux, le groupe de terminaux pouvant être tous les terminaux (canal de diffusion globale) ou bien une partie seulement desdits terminaux (canal de diffusion multipoint).

Toutefois, il n'est pas rare que certains messages, émis sur un canal de diffusion, ne soient pas correctement reçus par un ou plusieurs terminaux. Dans un tel cas, en particulier dans le cas de messages émis dans un contexte de mise à jour de logiciel, il est nécessaire de retransmettre les messages qui n'ont pas été correctement reçus.

Dans un système de communication sans fil pour des applications M2M et/ou loT, la consommation électrique des terminaux doit souvent être réduite au maximum, en particulier lorsqu'ils sont opérés sur batterie. Par conséquent, il peut être souhaitable dans certains cas de permettre à un terminal de recevoir un message retransmis en limitant l'impact sur sa consommation électrique.

Dans un tel système de communication sans fil, il n'est également pas rare de mettre en oeuvre des stations de base de type semi-duplex, afin de limiter le coût de fabrication desdites stations de base, et plus généralement du réseau d'accès. Or une station de base qui émet un message sur un canal de diffusion sur le lien descendant n'est pas disponible pour recevoir des messages émis sur lien montant. Par conséquent, il peut être souhaitable dans certains cas de permettre la retransmission de messages sur le lien descendant, tout en limitant la durée d'indisponibilité pour la réception de messages sur le lien montant.

La demande de brevet US 2012/140677 A1 divulgue un procédé d'émission d'un message par une station de base, à destination d'un groupe de terminaux, sur un canal de diffusion. Si un terminal ne reçoit pas correctement le message, une requête de retransmission du message est émise par le terminal à la station de base. La station de base peut alors choisir de retransmettre le message par une liaison point à point ou par un canal de diffusion en fonction du nombre de terminaux ayant émis une requête de retransmission du message.

### Exposé de l'invention

La présente invention a pour objectif de remédier à tout ou partie des limitations des solutions de l'art antérieur, notamment celles exposées ci-avant. Elle est défini par les revendications indépendantes. Toutefois, toutes les aspects présentés ci-dessous sont utiles pour mieux comprendre l'invention.

A cet effet, et selon un premier aspect, l'invention concerne un procédé d'émission d'un message par un réseau d'accès à destination d'un groupe de terminaux, comportant :
- une transmission, par le réseau d'accès, d'au moins un message à destination d'un groupe de terminaux sur un canal de diffusion,
- une réception, par ledit réseau d'accès, d'une requête de retransmission dudit message émise par un terminal n'ayant pas reçu correctement ledit message,
- une évaluation, par le réseau d'accès, d'un critère prédéterminé de retransmission par diffusion,
- lorsque ledit critère de retransmission par diffusion est vérifié : une retransmission du message, par le réseau d'accès, sur un canal de diffusion à destination du groupe de terminaux comportant ledit terminal ayant émis ladite requête de retransmission dudit message,
- lorsque le critère de retransmission par diffusion n'est pas vérifié : une retransmission du message, par le réseau d'accès, sur une liaison point à point à destination dudit terminal ayant émis ladite requête de retransmission.

Le critère de retransmission par diffusion est évalué en fonction de l'un au moins des paramètres suivants :
- un nombre de messages à retransmettre à destination d'un ou de plusieurs terminaux du groupe,
- une taille totale de messages à retransmettre à destination d'un ou de plusieurs terminaux du groupe,
- une capacité de canaux de diffusion planifiés par le réseau d'accès.

Un message émis sur le canal de diffusion est émis par le réseau d'accès à destination de tous les terminaux du groupe. En revanche, un message émis sur une liaison point à point entre le réseau d'accès et un terminal est émis seulement à destination dudit terminal.

Ainsi, lorsqu'un message transmis sur un canal de diffusion, à destination d'un groupe de terminaux, n'est pas correctement reçu par un terminal dudit groupe, alors ce message peut être retransmis à destination de ce terminal sur une liaison point à point.

Par conséquent, le message n'étant alors pas retransmis sur un canal de diffusion, ce message peut être retransmis sans impacter la consommation électrique des autres terminaux qui ont correctement reçu ce message. En effet, si ce message était retransmis sur un canal de diffusion, alors cela augmenterait la durée du canal de diffusion, et la durée d'écoute correspondante dudit canal de diffusion par les autres terminaux, pour recevoir à nouveau un message que lesdits autres terminaux avaient déjà reçu.

De manière générale, cela peut donc diminuer la durée d'utilisation du canal de diffusion puisqu'il est possible d'utiliser le canal de diffusion uniquement pour les transmissions des différents messages formant, par exemple, la mise à jour logicielle des terminaux, les retransmissions étant effectuées par le biais de liaisons point à point. Ainsi, l'ensemble des messages formant la mise à jour logicielle peut être diffusé rapidement au groupe de terminaux, les éventuelles retransmissions pouvant être effectuées par le biais de liaisons point à point.

En outre, en effectuant une retransmission sur une liaison point à point, cela peut permettre également de faciliter la planification de la retransmission et de réduire la consommation électrique du terminal qui a émis la requête de retransmission, par rapport à une retransmission sur un canal de diffusion. En effet, un canal de diffusion nécessite en principe d'être planifié et ne peut pas être prévu n'importe quand, car les terminaux du groupe doivent être informés de l'existence d'un canal de diffusion comportant un ou des messages destinés au groupe de terminaux auquel ils appartiennent. A contrario, une retransmission du message sur une liaison point à point est beaucoup plus simple à réaliser. Par exemple, il est possible de retransmettre le message dès réception de la requête de retransmission. Le cas échéant, il suffit au terminal d'écouter le lien descendant immédiatement après avoir émis la requête de retransmission, ce qui permet de réduire la durée d'écoute du lient descendant.

Il convient de noter que si le procédé selon l'invention comporte une retransmission, par le réseau d'accès, d'un message sur une liaison point à point à destination d'un terminal, cela n'empêche en rien la possibilité pour ledit procédé de comporter également une retransmission d'un message sur un canal de diffusion à destination d'un groupe de terminaux. Le choix de retransmettre sur une liaison point à point ou sur un canal de diffusion peut notamment dépendre d'un critère évalué par le réseau d'accès.

Ainsi, le réseau d'accès peut choisir, en fonction d'un critère de retransmission par diffusion, entre :
- retransmettre un message donné sur une liaison point à point, et
- retransmettre ce message sur un canal de diffusion.

Tel qu'indiqué ci-dessus, la retransmission sur une liaison point à point peut présenter de nombreux avantages. Toutefois, dans certains cas, il peut également être avantageux de retransmettre le message sur canal de diffusion.

Par exemple, si un même message n'a pas été correctement reçu par plusieurs terminaux et doit être retransmis par une même station de base, alors il peut être avantageux de retransmettre ce message sur un canal de diffusion afin de réduire la durée d'indisponibilité de ladite station de base en réception. En effet, il est alors plus rapide de retransmettre une seule fois ce message sur un canal de diffusion plutôt que de le retransmettre plusieurs fois sur des liaisons point à point respectives à destination des terminaux ayant émis une requête de retransmission pour ce message.

En outre, lorsque des messages différents ne sont pas reçus par des terminaux différents, une retransmission de ces différents messages sur un canal de diffusion permet de limiter la quantité de données de contrôle par rapport à la quantité de données utiles incluses dans les messages retransmis. Par exemple, sur un canal de diffusion, un seul destinataire est indiqué pour tous les messages retransmis. Pour une retransmission par des liaisons point à point, il y a autant de destinataires que de liaisons point à point, de sorte que la quantité de données de contrôle représentée par les identifiants des destinataires est plus importante que dans le cas d'une retransmission des messages sur un canal de diffusion.

De manière plus générale, le fait de pouvoir choisir, dans le cadre d'une transmission sur un canal de diffusion, entre une retransmission sur un canal de diffusion ou une retransmission sur une liaison point à point offre une grande flexibilité pour optimiser le fonctionnement du système de communication sans fil. Par exemple, il est possible, suivant les cas, de privilégier une diminution de la consommation électrique des terminaux, de privilégier une diminution de la durée d'indisponibilité des stations de base en réception, de privilégier une diminution de la durée de transmission de l'ensemble des messages formant une mise à jour logicielle, etc.

Par « un nombre de messages à retransmettre à destination d'un ou de plusieurs terminaux du groupe », on entend par exemple le nombre total de messages à retransmettre (c'est-à-dire la somme des nombres de messages à retransmettre à chacun des terminaux du groupe), le nombre de messages différents à retransmettre (indépendamment de savoir s'ils sont à retransmettre à des terminaux différents ou non), ou bien le nombre de messages différents à retransmettre à au moins deux terminaux différents.

Par une taille totale de messages à retransmettre à destination d'un ou de plusieurs terminaux du groupe, on entend par exemple la taille totale des messages à retransmettre (c'est-à-dire la somme des tailles totales des messages à retransmettre à chacun des terminaux du groupe), la taille totale des messages différents à retransmettre (indépendamment de savoir s'ils sont à retransmettre à des terminaux différents ou non), ou bien la taille totale des messages différents qui doivent être retransmis à au moins deux terminaux différents.

Par « une capacité de canaux de diffusion planifiés par le réseau d'accès », on entend par exemple un nombre de canaux de diffusion déjà planifiés, ou bien une quantité de ressources dans le domaine temporel et/ou dans le domaine fréquentiel disponibles dans des canaux de diffusion planifiés.

Dans des modes particuliers de mise en oeuvre, le procédé d'émission peut comporter en outre l'une ou plusieurs des caractéristiques suivantes, prises isolément ou selon toutes les combinaisons techniquement possibles.

Dans des modes particuliers de mise en oeuvre, le critère de retransmission par diffusion est considéré comme vérifié lorsque le réseau d'accès a reçu plusieurs requêtes de retransmission du même message, émises par un nombre de terminaux du groupe de terminaux supérieur à une valeur seuil prédéterminée.

Dans des modes particuliers de mise en oeuvre, le critère de retransmission par diffusion est considéré comme vérifié lorsque le réseau d'accès a reçu plusieurs requêtes de retransmission de messages différents, le nombre total et/ou la taille totale des messages à retransmettre étant supérieur à une valeur seuil prédéterminée.

Dans des modes particuliers de mise en oeuvre, le critère de retransmission par diffusion est considéré comme vérifié lorsque le réseau d'accès a reçu plusieurs requêtes de retransmission de messages différents, le nombre et/ou la taille totale des messages à retransmettre à au moins deux terminaux différents étant supérieur à une valeur seuil prédéterminée.

Dans des modes particuliers de mise en oeuvre, lequel le critère de retransmission par diffusion est considéré comme vérifié lorsque le nombre de canaux de diffusion planifiés permet la retransmission du ou des messages à retransmettre.

Dans des modes particuliers de mise en oeuvre, lorsqu'une requête de retransmission d'un terminal a été reçue pour plusieurs messages, le critère de retransmission par diffusion est évalué pour chaque message à retransmettre.

Dans des modes particuliers de mise en oeuvre, le procédé d'émission comporte une émission, par le réseau d'accès et lorsque le message doit être retransmis sur un canal de diffusion, d'une réponse à destination du terminal ayant émis la requête de transmission, ladite réponse comportant un ou des paramètres du canal de diffusion sur lequel ledit message sera retransmis.

Dans des modes particuliers de mise en oeuvre, le procédé d'émission comporte une émission, par le réseau d'accès et lorsque le message doit être retransmis sur une liaison point à point, d'une réponse à destination du terminal ayant émis la requête de transmission, ladite réponse comportant le message à retransmettre.

Selon un second aspect, l'invention concerne un réseau d'accès comportant une pluralité de stations de base adaptées à échanger des messages avec des terminaux, ledit réseau d'accès étant configuré pour :
- transmettre un message à destination d'un groupe de terminaux sur un canal de diffusion,
- recevoir une requête de retransmission dudit message émise par un terminal n'ayant pas reçu correctement ledit message,
- évaluer un critère prédéterminé de retransmission par diffusion,
- lorsque ledit critère de retransmission par diffusion est vérifié : retransmettre le message sur un canal de diffusion à destination du groupe de terminaux comportant ledit terminal ayant émis ladite requête de retransmission dudit message,
- lorsque le critère de retransmission par diffusion n'est pas vérifié : retransmettre le message sur une liaison point à point à destination dudit terminal ayant émis ladite requête de retransmission.

Le critère de retransmission par diffusion est évalué en fonction de l'un au moins des paramètres suivants :
- un nombre de messages à retransmettre à destination d'un ou de plusieurs terminaux du groupe,
- une taille de messages à retransmettre à destination d'un ou de plusieurs terminaux du groupe,
- une capacité de canaux de diffusion planifiés par le réseau d'accès.

### Présentation des figures

L'invention sera mieux comprise à la lecture de la description suivante, donnée à titre d'exemple nullement limitatif, et faite en se référant aux figures qui représentent :
[Fig. 1] une représentation schématique d'un système de communication sans fil,
[Fig. 2] un diagramme illustrant les principales étapes d'un procédé d'émission de messages par un réseau d'accès,
[Fig. 3] un diagramme illustrant les principales étapes d'un mode préféré de mise en oeuvre d'un procédé d'émission de messages par un réseau d'accès.

Dans ces figures, des références identiques d'une figure à une autre désignent des éléments identiques ou analogues. Pour des raisons de clarté, les éléments représentés ne sont pas à l'échelle, sauf mention contraire.

### Description des modes de réalisation

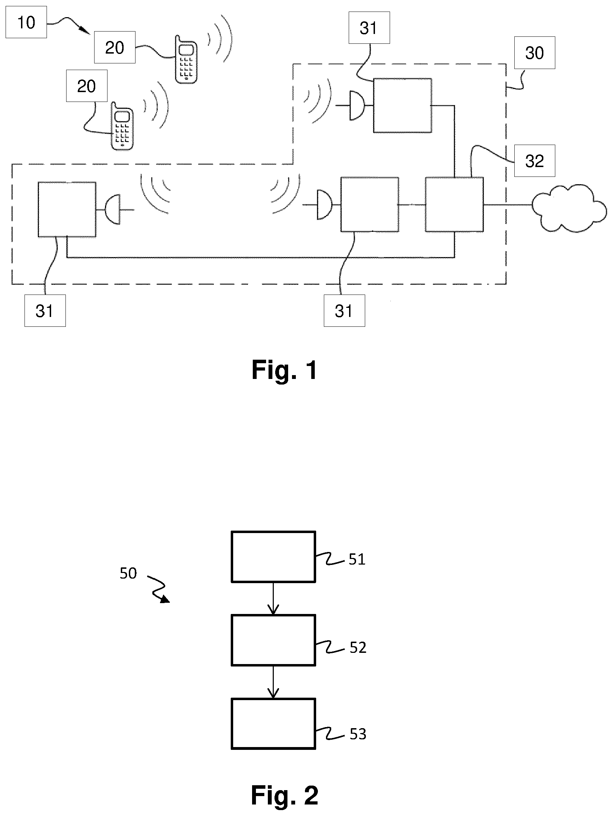

La figure 1 représente schématiquement un système 10 de communication sans fil comportant plusieurs terminaux 20 et un réseau d'accès 30 comportant plusieurs stations de base 31.

Les terminaux 20 et les stations de base 31 du réseau d'accès 30 échangent des messages sous la forme de signaux radioélectriques. Par « signal radioélectrique », on entend une onde électromagnétique se propageant via des moyens non filaires, dont les fréquences sont comprises dans le spectre traditionnel des ondes radioélectriques (quelques hertz à plusieurs centaines de gigahertz).

Dans la suite de la description, on se place à titre d'exemple et de manière non limitative dans le cas d'un système de communication sans fil du type LPWAN (acronyme anglais de « Low Power Wide Area Network »). Un tel système de communication sans fil est un réseau d'accès longue portée à faible consommation énergétique dont les débits sont généralement inférieurs à 1 Mbit/s. De tels systèmes de communication sans fil LPWAN sont particulièrement adaptés pour des applications du type loT.

Dans des modes particuliers de mise en oeuvre, le système 10 de communication sans fil peut être un système de communication à bande ultra étroite. Par « bande ultra étroite » (« Ultra Narrow Band » ou UNB dans la littérature anglo-saxonne), on entend que le spectre fréquentiel instantané des signaux radio émis part les terminaux est de largeur fréquentielle inférieur à deux kilohertz, voire inférieure à un kilohertz. Un tel système permet de limiter significativement la consommation électrique des terminaux lorsqu'ils communiquent avec le réseau d'accès.

Les terminaux 20 sont adaptés à émettre des messages sur un lien montant à destination du réseau d'accès 30.

Chaque station de base 31 est adaptée à recevoir les messages émis par des terminaux 20 qui se trouvent à sa portée. Chaque message ainsi reçu est par exemple transmis à un serveur 32 du réseau d'accès 30, éventuellement accompagné d'autres informations comme un identifiant de la station de base 31 qui l'a reçu, la puissance mesurée dudit message reçu, la date de réception et/ou la fréquence centrale mesurée dudit message reçu, etc. Le serveur 32 traite par exemple l'ensemble des messages reçus des différentes stations de base 31.

En outre, le réseau d'accès 30 est également adapté à émettre, par l'intermédiaire des stations de base 31, des messages sur un lien descendant à destination des terminaux 20, lesquels sont adaptés à les recevoir. Un message peut être émis sur le lien descendant sur une liaison point à point, c'est-à-dire à destination d'un terminal 20 spécifique unique, indiqué comme destinataire dans le message. Un message peut également être émis sur un canal de diffusion à destination d'un groupe de terminaux 20, identifié par un identifiant de groupe indiqué comme destinataire dans le message. Le canal de diffusion peut être un canal de diffusion globale, auquel cas le groupe de terminaux 20 correspond à tous les terminaux 20 du système 10 de communication sans fil. Le canal de diffusion peut être un canal de diffusion multipoint, auquel cas le groupe de terminaux 20 correspond à une partie seulement de tous les terminaux 20 du système 10 de communication sans fil.

La figure 2 représente les principales étapes d'un procédé 50 d'émission, par un réseau d'accès 30, d'un message à destination d'un groupe de terminaux, lesquelles sont :
- une étape 51 de transmission, par le réseau d'accès 30, d'au moins un message à destination du groupe de terminaux 20 sur un canal de diffusion,
- une étape 52 de réception, par ledit réseau d'accès 30, d'une requête de retransmission dudit message émise un terminal 20 n'ayant pas reçu correctement ledit message,
- une étape 53 de retransmission, par ledit réseau d'accès 30, dudit message sur une liaison point à point à destination du terminal 20.

Ainsi, le procédé 50 d'émission, dans un contexte d'émission d'un message à destination d'un groupe de terminaux 20 sur un canal de diffusion, permet d'effectuer la retransmission d'un message non correctement reçu par un terminal 20 sur une liaison point à point à destination dudit terminal 20.

Il est à noter que les différentes étapes illustrées par la figure 2 sont exécutées par le réseau d'accès 30, en l'occurrence par au moins une station de base 31 du réseau d'accès 30, et éventuellement par le serveur 32.

Dans la suite de la description, on se place de manière non limitative dans le cas où les étapes du procédé 50 d'émission sont exécutées par les stations de base 31 du réseau d'accès 30.

A cet effet, chaque station de base 31 comporte par exemple un circuit de traitement (non représenté sur les figures), comportant par exemple un ou plusieurs processeurs et des moyens de mémorisation (disque dur magnétique, mémoire électronique, disque optique, etc.) dans lesquels est mémorisé un produit programme d'ordinateur, sous la forme d'un ensemble d'instructions de code de programme à exécuter pour mettre en oeuvre les étapes du procédé 50 d'émission. Alternativement ou en complément, le circuit de traitement comporte un ou des circuits logiques programmables (FPGA, PLD, etc.), et/ou un ou des circuits intégrés spécialisés (ASIC), et/ou un ensemble de composants électroniques discrets, etc., adaptés à mettre en oeuvre tout ou partie desdites étapes.

Chaque station de base 31 comporte en outre un circuit radioélectrique (non représenté sur les figures) comportant des équipements (antenne, amplificateur, oscillateur local, mélangeur, filtre analogique, etc.) connus de l'homme de l'art, permettant à ladite station de base 31 d'émettre et de recevoir des messages sous la forme de signaux radioélectriques.

En d'autres termes, le circuit de traitement et le circuit radioélectrique correspondent à des moyens du réseau d'accès 30 qui sont configurés de façon logicielle (produit programme d'ordinateur spécifique) et/ou matérielle (FPGA, PLD, ASIC, composants électroniques discrets, etc.) pour mettre en oeuvre les étapes du procédé 50 d'émission.

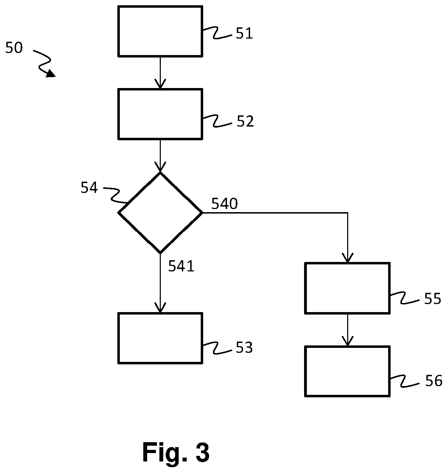

La figure 3 représente schématiquement les principales étapes d'un mode préféré de mise en oeuvre du procédé 50 d'émission. Tel qu'illustré par la figure 3, le procédé 50 d'émission reprend toutes les étapes de la figure 2.

Tel qu'illustré par la figure 3, le procédé 50 d'émission comporte en outre, lorsque le réseau d'accès 30 reçoit une requête de retransmission d'un message émise par un terminal 20 : une étape 54 d'évaluation, par le réseau d'accès 30, d'un critère prédéterminé de retransmission par diffusion.

Lorsque ledit critère de retransmission par diffusion est vérifié (référence 540 sur la figure 3), le procédé 50 d'émission comporte une étape 56 de retransmission du message, par le réseau d'accès 30, sur un canal de diffusion à destination du groupe de terminaux 20 comportant ledit terminal 20 ayant émis ladite requête de retransmission dudit message.

Lorsque le critère de retransmission par diffusion n'est pas vérifié (référence 541 sur la figure 3), le procédé 50 d'émission comporte l'étape 53 de retransmission du message sur une liaison point à point, discutée ci-avant en référence à la figure 2.

Ainsi, dans le mode préféré de mise en oeuvre illustré par la figure 3, le réseau d'accès 30 détermine, en fonction d'un critère de retransmission par diffusion, si un message indiqué dans une requête de retransmission doit être émis sur un canal de diffusion ou sur un une liaison point à point. Par conséquent, grâce à l'évaluation du critère de retransmission par diffusion, le réseau d'accès 30 pourra privilégier une retransmission sur un canal de diffusion dans certains scénarios, et privilégier une retransmission sur une liaison point à point dans d'autres scénarios.

Dans des modes préférés de mise en oeuvre, le critère de retransmission par diffusion est évalué en fonction de l'un au moins des paramètres suivants :
- nombre de terminaux ayant émis une requête de retransmission d'un ou de plusieurs messages,
- nombre de messages à retransmettre à destination d'un ou de plusieurs terminaux du groupe,
- taille totale de messages à retransmettre à destination d'un ou de plusieurs terminaux du groupe,
- place disponible dans des canaux de diffusion planifiés par le réseau d'accès.

Suivant un premier exemple, le critère de retransmission par diffusion est considéré comme vérifié lorsque le réseau d'accès 30 a reçu plusieurs requêtes de retransmission du même message, émises par un nombre de terminaux 20 différents du groupe de terminaux 20 qui est supérieur à une valeur seuil positive prédéterminée, de préférence supérieure à deux (2), voire supérieure à dix (10). Ainsi, si un seul terminal 20 a requis la retransmission d'un message donné, ledit message est retransmis sur une liaison point à point. Si un grand nombre de terminaux 20 a requis la retransmission d'un même message, ledit message est avantageusement retransmis sur un canal de diffusion, afin notamment de limiter l'occupation temporelle de la bande fréquentielle utilisée pour l'émission des messages sur le lien descendant, de limiter la durée d'indisponibilité en réception de la station de base 31 qui retransmet le message lorsque ladite station de base 31 est de type semi-duplex, etc.

Suivant un second exemple, qui peut être considéré en combinaison avec l'exemple précédent, le critère de retransmission par diffusion est considéré comme vérifié lorsque le réseau d'accès 30 a reçu plusieurs requêtes de retransmission de messages différents, émises par un ou plusieurs terminaux 20 du groupe, le nombre et/ou la taille totale des messages à retransmettre étant supérieur(e) à une valeur seuil positive prédéterminée. Ainsi, si le réseau d'accès 30 doit retransmettre un seul message, ledit message est retransmis sur une liaison point à point. Si un grand nombre de messages doit être retransmis, et/ou si la taille totale des messages à retransmettre est importante, lesdits messages sont avantageusement retransmis sur un canal de diffusion, afin notamment de limiter l'occupation temporelle de la bande fréquentielle utilisée pour l'émission des messages sur le lien descendant, de limiter la durée d'indisponibilité en réception de la station de base 31 qui retransmet le message lorsque ladite station de base 31 est de type semi-duplex, etc.

Il convient de noter que le critère de retransmission peut être basé sur le nombre total de messages à retransmettre (c'est-à-dire la somme des nombres de messages à retransmettre à chacun des terminaux du groupe). Toutefois, le critère de retransmission peut également être basé sur le nombre de messages différents à retransmettre (indépendamment de savoir s'ils sont à retransmettre à des terminaux différents ou non). Avantageusement, le critère de retransmission peut également être basé sur le nombre de messages différents à retransmettre à au moins deux terminaux différents. En effet, l'avantage de retransmettre par un canal de diffusion sera plus important dans un scénario où l'on doit retransmettre un ensemble de messages pour lequel chaque message doit être retransmis à plusieurs terminaux différents, par rapport à un scénario où l'on doit retransmettre un ensemble de messages pour lequel chaque message ne doit être retransmis qu'à un seul terminal.

De manière similaire, il convient de noter que le critère de retransmission peut être basé sur la taille totale des messages à retransmettre (c'est-à-dire la somme des tailles totales des messages à retransmettre à chacun des terminaux du groupe), ou sur la taille totale des messages différents à retransmettre (indépendamment de savoir s'ils sont à retransmettre à des terminaux différents ou non), ou bien sur la taille totale des messages différents qui doivent être retransmis à au moins deux terminaux différents.

Suivant un troisième exemple, qui peut être considéré en combinaison avec l'exemple précédent, le critère de retransmission par diffusion est considéré comme vérifié lorsque la place disponible dans un ou des canaux de diffusion planifiés permet la retransmission du ou des messages à retransmettre. Autrement dit, le critère de retransmission par diffusion est considéré comme vérifié lorsque les canaux de diffusion déjà planifiés présentent une capacité suffisante (par exemple en termes de ressources dans le domaine temporel et/ou fréquentiel, ou en termes de nombre de canaux de diffusion planifiés). En effet, si un ou des canaux de diffusion sont planifiés et si la place disponible est suffisante pour retransmettre les messages pour lesquels le réseau d'accès 30 a reçu des requêtes de retransmission, alors il est avantageux d'effectuer la retransmission par diffusion, puisque les terminaux 20 doivent écouter le ou les canaux de diffusion planifiés. Si la place disponible est suffisante pour retransmettre une partie seulement desdits messages, il est également possible retransmettre cette partie des messages sur le ou les canaux de diffusion planifiés, et de retransmettre les autres messages sur une ou des liaisons point à point.

Il est à noter qu'il est également possible de considérer d'autres paramètres pour l'évaluation du critère de retransmission par diffusion. En outre, le choix d'un critère particulier de retransmission par diffusion ne constitue qu'une variante d'implémentation de l'invention.

Dans des modes particuliers de mise en oeuvre, lorsque le message doit être retransmis sur une liaison point à point (référence 541 sur la figure 3), le message est retransmis en réponse à la requête de retransmission, sur une liaison point à point à destination du terminal 20 ayant émis ladite requête de retransmission. La réponse comporte dans ce cas l'identifiant spécifique de terminal 20 en tant que destinataire de ladite réponse, ainsi que le message à retransmettre. Ladite réponse peut également comporter, par exemple, l'identifiant de groupe du groupe de terminaux 20, qui n'est pas utilisé pour identifier le destinataire de ladite réponse (puisque ladite réponse est émise sur une liaison point à point) mais pour identifier le flux de messages auquel appartient le message retransmis. Ladite réponse peut également comporter, par exemple, un identifiant du message retransmis, qui peut par exemple se présenter sous la forme d'un numéro de séquence dudit message, représentatif du rang dudit message dans la séquence de messages émis à destination du groupe de terminaux 20.

Il est cependant à noter que le message à retransmettre peut également être transmis ultérieurement, dans une communication ultérieure sur une liaison point à point à destination dudit terminal. Le cas échéant, le réseau d'accès 30 peut émettre, sur une liaison point à point, une réponse à la requête de retransmission. Cette réponse peut comporter par exemple, outre l'identifiant spécifique dudit terminal 20 en tant que destinataire de ladite réponse, un ou plusieurs paramètres de la communication ultérieure, comme par exemple la fréquence sur laquelle la communication ultérieure sera émise, l'instant auquel la communication ultérieure sera émise, etc. De son côté, la communication ultérieure peut également comporter, outre le message à retransmettre, l'identifiant de groupe du groupe de terminaux 20 en tant qu'identifiant du flux de messages auquel appartient le message retransmis, l'identifiant du message retransmis au sein dudit flux de messages, etc.

Dans des modes particuliers de mise en oeuvre, tel qu'illustré par la figure 3, le procédé 50 d'émission peut comporter, lorsque le message doit être retransmis sur un canal de diffusion (référence 540 sur la figure 3), une étape 55 d'émission, par le réseau d'accès 30, d'une réponse à destination du terminal 20 ayant émis la requête de transmission. De préférence, ladite réponse est émise sur une liaison point à point à destination dudit terminal 20. Dans des modes particuliers de mise en oeuvre, ladite réponse peut comporter un ou des paramètres du canal de diffusion sur lequel ledit message sera retransmis, comme par exemple la fréquence sur laquelle le canal de diffusion sera émis par le réseau d'accès 30, l'instant auquel ledit canal de diffusion sera émis par le réseau d'accès 30, etc.

## Revendications

1. - Procédé (50) d'émission d'un message par un réseau d'accès (30) d'un système de communication sans fil à destination d'un groupe de terminaux (20), comportant :
- une transmission (51), par le réseau d'accès (30), d'au moins un message à destination d'un groupe de terminaux (20) sur un canal de diffusion,
- une réception (52), par ledit réseau d'accès (30), d'au moins une requête de retransmission dudit message émise par un terminal n'ayant pas reçu correctement ledit message,
- une évaluation (54), par le réseau d'accès (30), d'un critère prédéterminé de retransmission par diffusion,
- lorsque ledit critère de retransmission par diffusion est vérifié : une retransmission (56) du message, par le réseau d'accès (30), sur un canal de diffusion à destination du groupe de terminaux comportant ledit terminal ayant émis ladite requête de retransmission dudit message,
- lorsque le critère de retransmission par diffusion n'est pas vérifié : une retransmission (53) du message, par le réseau d'accès (30), sur une liaison point à point à destination dudit terminal ayant émis ladite requête de retransmission,
**caractérisé en ce que** le critère de retransmission par diffusion est évalué en fonction de l'un au moins des paramètres suivants :
- lorsque le réseau d'accès a reçu plusieurs requêtes de retransmission de messages différents, le nombre et/ou la taille totale desdits messages,
- une capacité de canaux de diffusion planifiés par le réseau d'accès.

2. - Procédé (50) selon la revendication 1, dans lequel le critère de retransmission par diffusion est considéré comme vérifié lorsque le réseau d'accès a reçu plusieurs requêtes de retransmission de messages différents, le nombre total et/ou la taille totale des messages à retransmettre étant supérieur à une valeur seuil prédéterminée.

3. - Procédé (50) selon la revendication 1, dans lequel le critère de retransmission par diffusion est considéré comme vérifié lorsque le réseau d'accès a reçu plusieurs requêtes de retransmission de messages différents, le nombre et/ou la taille totale des messages à retransmettre à au moins deux terminaux différents du groupe étant supérieur à une valeur seuil prédéterminée.

4. - Procédé (50) selon la revendication 1, dans lequel le critère de retransmission par diffusion est considéré comme vérifié lorsque le nombre de canaux de diffusion planifiés permet la retransmission du ou des messages à retransmettre.

5. - Procédé (50) selon l'une quelconque des revendications 1 à 4, comportant une émission, par le réseau d'accès (30) et lorsque le message doit être retransmis sur un canal de diffusion, d'une réponse à destination du terminal (20) ayant émis la requête de transmission, ladite réponse comportant un ou des paramètres du canal de diffusion sur lequel ledit message sera retransmis.

6. - Procédé (50) selon l'une quelconque des revendications 1 à 5, comportant une émission, par le réseau d'accès (30) et lorsque le message doit être retransmis sur une liaison point à point, d'une réponse sur la liaison point à point à destination du terminal (20) ayant émis la requête de transmission, ladite réponse comportant le message à retransmettre.

7. - Procédé (50) selon la revendication 1, dans lequel, lorsqu'une requête de retransmission d'un terminal a été reçue pour plusieurs messages, le critère de retransmission par diffusion est évalué pour chaque message à retransmettre.

8. - Réseau d'accès (30) pour un système (10) de communication sans fil comportant une pluralité de stations de base (31) adaptées à échanger des messages avec des terminaux (20), ledit réseau d'accès (30) étant configuré pour :
- transmettre au moins un message à destination d'un groupe de terminaux (20) sur un canal de diffusion,
- recevoir au moins une requête de retransmission dudit message émise par un terminal n'ayant pas reçu correctement ledit message,
- évaluer un critère prédéterminé de retransmission par diffusion,
- lorsque ledit critère de retransmission par diffusion est vérifié : retransmettre le message sur un canal de diffusion à destination du groupe de terminaux comportant ledit terminal ayant émis ladite requête de retransmission dudit message,
- lorsque le critère de retransmission par diffusion n'est pas vérifié : retransmettre le message sur une liaison point à point à destination dudit terminal ayant émis ladite requête de retransmission,
**caractérisé en ce que** le critère de retransmission par diffusion est évalué en fonction de l'un au moins des paramètres suivants :
- lorsque le réseau d'accès a reçu plusieurs requêtes de retransmission de messages différents, le nombre et/ou la taille totale desdits messages,
- une capacité de canaux de diffusion planifiés par le réseau d'accès.

## Patentansprüche

1. Verfahren (50) zum Senden einer Nachricht über ein Zugangsnetz (30) eines drahtlosen Kommunikationssystems an eine Gruppe von Endgeräten (20), enthaltend:
- eine Übertragung (51), über das Zugangsnetz (30), von mindestens einer Nachricht an eine Gruppe von Endgeräten (20) auf einem Verbreitungskanal,
- einen Empfang (52), über das Zugangsnetz (30), von mindestens einer Anforderung zur erneuten Übertragung der Nachricht, die durch ein Endgerät gesendet wurde, das die Nachricht nicht korrekt empfangen hat,
- eine Bewertung (54), über das Zugangsnetz (30), eines vorbestimmten Kriteriums der erneuten Übertragung durch Verbreitung,
- wenn das Kriterium der erneuten Übertragung durch Verbreitung bestätigt wird: eine erneute Übertragung (56), über das Zugangsnetz (30), der Nachricht an die Gruppe der Endgeräte auf einem Verbreitungskanal, die das Endgerät enthält, das die Anforderung zur erneuten Übertragung der Nachricht gesendet hat,
- wenn das Kriterium der erneuten Übertragung durch Verbreitung nicht bestätigt wird: eine erneute Übertragung (53), über das Zugangsnetz (30), der Nachricht an das Endgerät auf einer Punkt-zu-Punkt-Verbindung, das die Anforderung zur erneuten Übertragung gesendet hat,
**dadurch gekennzeichnet, dass** das Kriterium der erneuten Übertragung durch Verbreitung anhand von mindestens einem der folgenden Parameter bewertet wird:
- wenn das Zugangsnetz mehrere verschiedene Anforderungen zur erneuten Übertragung der Nachrichten erhalten hat, die Anzahl und/oder Gesamtgröße der Nachrichten,
- eine Kapazität von Verbreitungskanälen, die vom Zugangsnetz geplant werden.

2. Verfahren (50) nach Anspruch 1, wobei das Kriterium der erneuten Übertragung durch Verbreitung als bestätigt gilt, wenn das Zugangsnetz mehrere verschiedene Anforderungen zur erneuten Übertragung der Nachrichten empfangen hat, wobei die Gesamtanzahl und/oder Gesamtgröße der erneut zu übertragenden Nachrichten größer als ein vorbestimmter Schwellenwert ist.

3. Verfahren (50) nach Anspruch 1, wobei das Kriterium der erneuten Übertragung durch Verbreitung als bestätigt gilt, wenn das Zugangsnetz mehrere verschiedene Anforderungen zur erneuten Übertragung der Nachrichten empfangen hat, wobei die Anzahl und/oder Gesamtgröße der Nachrichten, die erneut an mindestens zwei verschiedene Endgeräte in der Gruppe zu übertragen sind, größer als ein vorbestimmter Schwellenwert ist.

4. Verfahren (50) nach Anspruch 1, wobei das Kriterium der erneuten Übertragung durch Verbreitung als bestätigt gilt, wenn die Anzahl der geplanten Verbreitungskanäle die erneute Übertragung der erneut zu übertragenden Nachricht(en) ermöglicht.

5. Verfahren (50) nach einem der Ansprüche 1 bis 4, eine Sendung, über das Zugangsnetz (30), enthaltend, und wenn die Nachricht erneut zu übertragen ist auf einem Verbreitungskanal, einer Antwort an das Endgerät (20), das die Anforderung zur Übertragung gesendet hat, wobei die Antwort einen oder mehrere Parameter des Verbreitungskanals enthält, auf dem die Nachricht erneut übertragen wird.

6. Verfahren (50) nach einem der Ansprüche 1 bis 5, eine Sendung, über das Zugangsnetz (30), enthaltend, und wenn die Nachricht über eine Punkt-zu-Punkt-Verbindung erneut übertragen werden soll, einer Antwort auf der Punkt-zu-Punkt-Verbindung an das Endgerät (20), das die Anforderung zur Übertragung gesendet hat, wobei die Antwort die erneut zu übertragende Nachricht enthält.

7. Verfahren (50) nach Anspruch 1, wobei, wenn eine Anforderung zur erneuten Übertragung von einem Endgerät für mehrere Nachrichten empfangen wurde, das Kriterium der erneuten Übertragung durch Verbreitung für jede erneut zu übertragende Nachricht bewertet wird.

8. Zugangsnetz (30) für ein drahtloses Kommunikationssystem (10), eine Vielzahl von Basisstationen (31) enthaltend, die zum Austausch von Nachrichten mit Endgeräten (20) geeignet sind, wobei das Zugangsnetz (30) konfiguriert ist zum:
- Übertragen von mindestens einer Nachricht an eine Gruppe von Endgeräten (20) auf einem Verbreitungskanal,
- Empfangen von mindestens einer Anforderung zur erneuten Übertragung der Nachricht, die von einem Endgerät gesendet wurde, das die Nachricht nicht korrekt empfangen hat,
- Bewerten eines vorbestimmten Kriteriums der erneuten Übertragung durch Verbreitung,
- wenn das Kriterium der erneuten Übertragung durch Verbreitung bestätigt wird: erneutem Übertragen der Nachricht auf einem Verbreitungskanal an die Gruppe von Endgeräten, die das Endgerät enthält, das die Anforderung zur erneuten Übertragung der Nachricht gesendet hat,
- wenn das Kriterium der erneuten Übertragung durch Verbreitung nicht bestätigt wird: erneutem Übertragen der Nachricht auf einer Punkt-zu-Punkt-Verbindung an das Endgerät, das die Anforderung zur erneuten Übertragung gesendet hat,
**dadurch gekennzeichnet, dass** das Kriterium der erneuten Übertragung durch Verbreitung anhand von mindestens einem der folgenden Parameter bewertet wird:
- wenn das Zugangsnetz mehrere verschiedene Anforderungen zur erneuten Übertragung der Nachrichten erhalten hat, die Anzahl und/oder die Gesamtgröße der Nachrichten,
- eine Kapazität von Verbreitungskanälen, die vom Zugangsnetz geplant werden.

## Claims

1. - A method (50) for transmitting a message by an access network (30) from a wireless communication system to a group of terminals (20), including:
- transmitting (51), by the access network (30), at least one message to a group of terminals (20) over a broadcast channel,
- receiving (52), by said access network (30), at least one request for retransmission of said message transmitted by a terminal that has not correctly received said message,
- evaluating (54), by the access network (30), a predetermined broadcast retransmission criterion,
- when said broadcast retransmission criterion is verified: retransmitting (56) the message, by the access network (30), over a broadcast channel to the group of terminals including said terminal having transmitted said request for retransmission of said message,
- when the broadcast retransmission criterion is not verified: retransmitting (53) the message, by the access network (30), over a point-to-point link to said terminal having transmitted said request for retransmission, **characterized in that** the broadcast retransmission criterion is evaluated based on at least one of the following parameters:
- when the access network (30) has received several requests for retransmission of several different messages, a number and/or a total size of said messages,
- a capacity of broadcast channels planned by the access network.

2. - The method (50) according to claim 1, wherein the broadcast retransmission criterion is considered to be verified when the access network has received several requests for retransmission of different messages, the total number and/or the total size of messages to be retransmitted being greater than a predetermined threshold value.

3. - The method (50) according to claim 1, wherein the broadcast retransmission criterion is considered to be verified when the access network has received several requests for retransmission of different messages, the number and/or the total size of messages to be retransmitted to at least two different terminals of the group being greater than a predetermined threshold value.

4. - The method (50) according to claim 1, wherein the broadcast retransmission criterion is considered to be verified when the number of planned broadcast channels allows the retransmission of the message(s) to be retransmitted.

5. - The method (50) according to any one of claims 1 to 4, including transmitting, by the access network (30) and when the message must be retransmitted over a broadcast channel, a response to the terminal (20) having transmitted the request for retransmission, said response including one or more parameters of the broadcast channel on which said message will be retransmitted.

6. - The method (50) according to any one of claims 1 to 5, including transmitting, by the access network (30) and when the message must be retransmitted over a point-to-point link, a response over the point-to-point link to the terminal (20) having transmitted the request for retransmission, said response including the message to be retransmitted.

7. - The method (50) according to claim 1, wherein, when a request for retransmission from a terminal has been received for several messages, the broadcast retransmission criterion is evaluated for each message to be retransmitted.

8. - An access network (30) for a wireless communication system (10) including a plurality of base stations (31) adapted for exchanging messages with terminals (20), said access network (30) being configured for:
- transmitting at least one message to a group of terminals (20) over a broadcast channel,
- receiving at least one request for retransmission of said message transmitted by a terminal that has not correctly received said message,
- evaluating a predetermined broadcast retransmission criterion,
- when said broadcast retransmission criterion is verified: retransmitting the message over a broadcast channel to the group of terminals including said terminal having transmitted said request for retransmission of said message,
- when the broadcast retransmission criterion is not verified: retransmitting the message over a point-to-point link to said terminal having transmitted said request for retransmission,
**characterized in that** the broadcast retransmission criterion is evaluated based on at least one of the following parameters:
- when the access network (30) has received several requests for retransmission of several different messages, a number and/or a total size of said messages,
- a capacity of broadcast channels planned by the access network.
